**Europäisches Patentamt**

**European Patent Office**

**Office européen des brevets**

(19)

(11) Publication number: **0 187 240**
A2

(12) # EUROPEAN PATENT APPLICATION

(21) Application number: **85114876.7**

(22) Date of filing: **23.11.85**

(51) Int. Cl.⁴: **G 06 F 12/06**

(30) Priority: **28.11.84 US 675907**

(43) Date of publication of application:
**16.07.86 Bulletin 86/29**

(84) Designated Contracting States:
**DE FR GB IT NL SE**

(71) Applicant: **Hewlett-Packard Company**
**Mail Stop 20 B-O 3000 Hanover Street**
**Palo Alto California 94304(US)**

(72) Inventor: **Newman, James Preston, Jr.**
**2227 Creekside Road**
**Santa Rosa California 95405(US)**

(74) Representative: **Patentanwälte Kohler - Schwindling -**
**Späth**
**Hohentwielstrasse 41**
**D-7000 Stuttgart 1(DE)**

(54) **Addressing matrix.**

(57) A method is described for configuring an instrument that may be comprised of masters ($M_1$) and sub-masters ($M_2$) and slaves for each such that communication links can be established between each master or sub-master and its slaves. The elements are assigned row and column addresses in a grid in such manner that each master ($M_1$) and sub-master ($M_2$) may determine the addresses of its slaves by scanning along rows or columns of the grid. A sub-master ($M_2$) may be a slave of a master ($M_1$) and has its own area for its slaves. In the particular method described for attaining these results, slaves are at the same or a higher column address and at a higher row address than their master and any element at a higher column address but at the same or lower row address terminates the slave area at the previous column.

FIG 2

EP 0 187 240 A2

0187240

## Background of the Invention

Instrumentation systems have been configured by assigning addresses to a master and its slaves in a hierarchy of control. In some case, it is desirable that one of the slaves of a master may be a sub-master having slaves of its own. For any given configuration, communications are only set up between each master and its slaves and should exclude communications with the slaves of another master or sub-master. For any given configuration, the addresses can be arbitrarily selected and stored in the memory of a controller that sets up the communication links. When, however, the configuration is to be changed, it is necessary to write in the addresses required but this may be difficult and time consuming or even impossible.

## Brief Summary of the Invention

In accordance with this invention, each of the elements of the instrument, whether master, slave or sub-master, are given row and column addresses in a grid in accordance with predetermined rules such that a master can scan the addresses of the grid and identify its slaves. This requires that the row and column addresses for the slaves of a master be within an area having a periphery that can be determined by scanning along rows or columns. Furthermore, if one of the slaves of a master is a sub-master, the area of the grid in which the slaves of the sub-master lie must also be such that its periphery can be easily determined when the master is scanning to find its slaves. This is necessary in order to avoid setting up improper communication links between a master and the slave of another master or sub-master. A particularly advantageous method of assigning addresses is set forth in the

1

body of the specification. In order to identify a sub-master, it is given a different digital name than any other slave.

## Brief Description of the Drawings

FIGURE 1 shows the area of a grid that may be occupied by a single master and its slaves;

FIGURE 2 shows the respective areas of a grid occupied by a master and its slaves and a sub-master and its slaves;

FIGURE 3 shows a more complex hierarchy of masters, sub-masters and their respective slaves;

FIGURE 3A illustrates grid addresses that might be used in accordance with the particular set of rules described herein; and

FIGURES 4A, 4B and 4C illustrate a flow chart for a scanning procedure that may be used to find slaves when they are assigned grid addresses in accordance with the particular rules described herein.

## Detailed Description of the Invention

Before referring to the drawings in detail, the following general rules should be noted:

1) A slave can have only one master.

2) Both masters and sub-masters perform the same search for its slave area.

3) The search must

a) find where the slave area begins and ends,

b) find all the slaves or sub-masters in the slave area,

c) not search the area for the slaves of a sub-master.

The particular rules for the setting of addresses are as follows:

1) Slaves are at the same or higher column address and at a higher row address than their master.

2) Any unit at a higher column address but at the same or lower row address terminates the slave area at the previous column.

Wherever the grid is shown, it has row addresses 0-7 increasing in an upward direction and column addresses 0-31 increasing from left to right. It will be readily apparent that the terms "increase" and "decrease" could be interchanged.

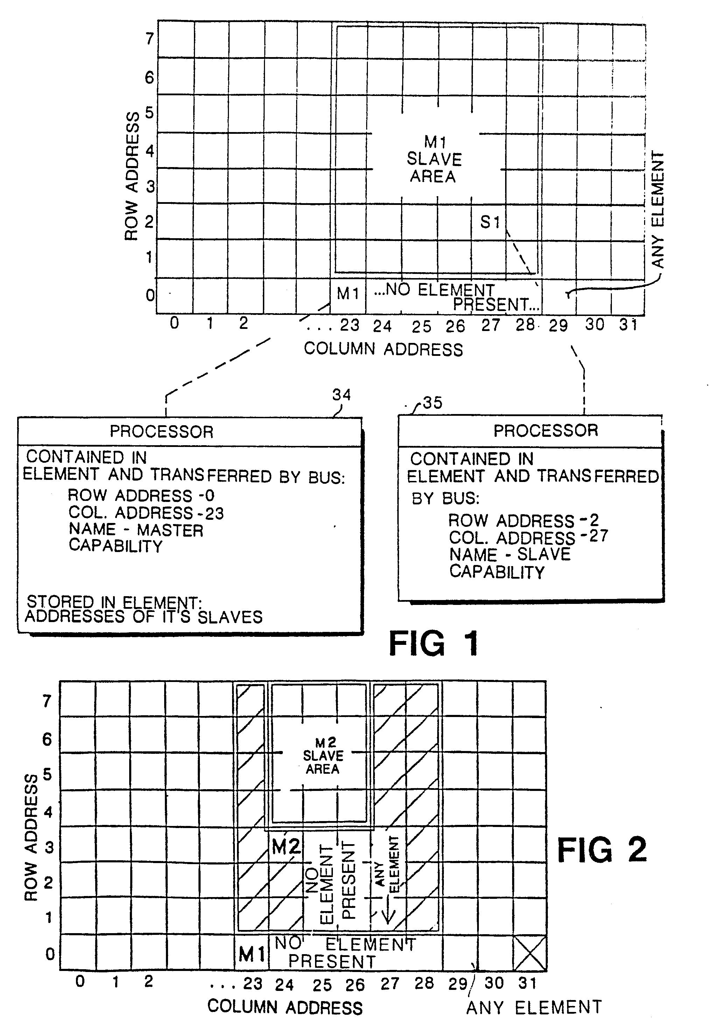

An illustration of how a master makes its search to find the area in which its slaves may be located is shown in Figure 1 wherein a master $M_1$ of an independent instrument is located at row 0, column 23 (denoted 0,23). During its search $M_1$ will find the element at the address 0,29 which limits the potential area of the grid in which its slaves such as $S_1$ can be located. This area is the rectangle designated $M_1$ SLAVE AREA.

Figure 2 illustrates what is called one level of nesting in which a sub-master $M_2$ is a slave of $M_1$ and therefore must be in $M_1$'s SLAVE AREA. When $M_1$ is scanning the address grid and reaches $M_2$ it inquires for that element's digital name. A master or sub-master has a digital name different from a slave so that $M_1$ is informed that its search can skip over the $M_2$'s SLAVE AREA. From the rules given above there will, for this configuration, be no slave of either $M_1$ or $M_2$ in the eleven squares in which NO ELEMENT PRESENT is written. Any element in the five squares in the row 0 would further restrict the potential slave area of $M_1$, and any element in the upper six squares would further restrict the potential

3

slave area of $M_2$. The element at address 3,27 not only defines the right hand boundary of $M_2$'s SLAVE AREA but also identifies the addresses that $M_1$'s search sould skip. Although the scanning process can be done horizontally, it has been found more efficient to scan vertically up columns starting with the column in which a master is located and at the row addresses just above it. Following this procedure would first locate the row addresses of any units in the column 23 above the row 0 where $M_1$ is. The scan would then shift to the next higher column address and to row address 0 (0,24) and scan upward until it finds $M_2$ at 3,24. $M_2$ is known to be sub-master because of the digital name it is given. $M_1$ then scans address locations with a column address greater than 24 and a row address equal to or less than 3. This avoids $M_2$'s SLAVE AREA. When it finds the unit at 3,27 the potential slave area for $M_2$ is determined. In its further search, $M_1$ continues up column 27 since the rest of column 27 is not in $M_2$'s SLAVE AREA. The remainder of the search proceeds as before until $M_1$ finds a unit at 0,29. Any element at this address defines the right hand boundary of the slave area of $M_1$. Its slaves can only be located in the shaded squares. $M_2$ carries on a similar search. One of the slaves of $M_2$ may also be a sub-master leading to another nesting level, etc.

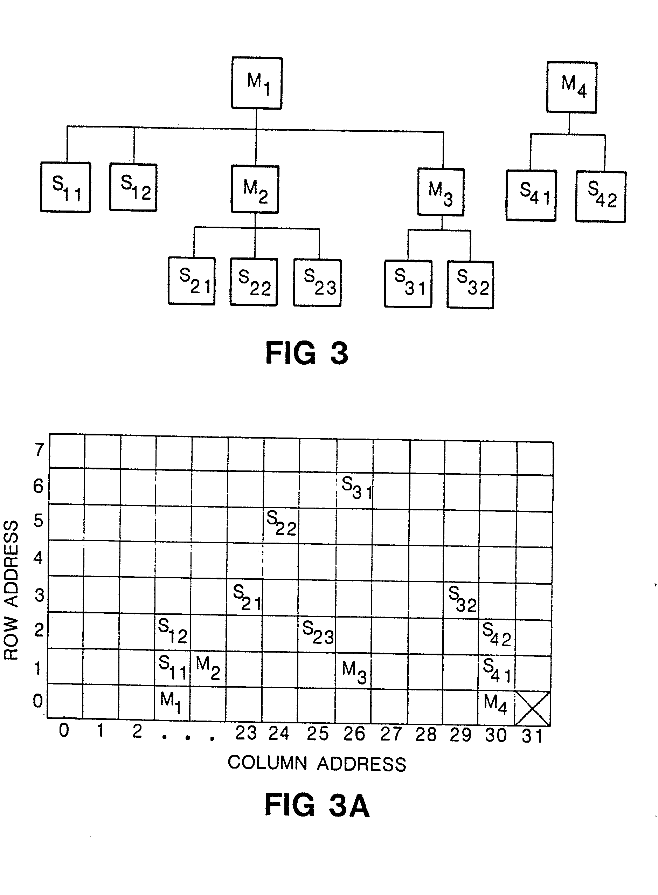

Figure 3 shows a more complex hierarchy in which there is an independent master $M_1$ having the elements $S_{11}$ and $S_{12}$ as slaves, a slave $M_2$ that is a sub-master having three slaves $S_{21}$, $S_{22}$, and $S_{23}$, and another slave $M_3$ that is a sub-master having two slaves $S_{31}$ and $S_{32}$. Another independent master $M_2$ is shown having slaves $S_{41}$ and $S_{42}$. Communications are set up between any master and any element that is one step lower in its hiearchy. Possible grid addresses for

4

such a hierarchy are shown in Figure 3A.

Reference is again made to Figure 1 to explain how an address of a slave found in a search may be used. As shown in the rectangle 34, the master element $M_1$ stores its row and column addresses, a name indicating that it is a master and an identification of the function it can perform. It also has a processor and means for storing the address of any slaves that are found during its search.

As shown in a rectangle 35, the slave $S_1$ stores its row and column addresses, a name indicating that it is a slave and not a master and an identification of the function it can perform.

When $M_1$'s search encounters an element such as $S_1$, it determines $S_1$'s row and column addresses, whether or not it is a master or a slave and the function it can perform. It can use this information to control the slave. Whereas this could be done manually in some cases it would be impractical or impossible in others. How masters use their slaves is beyond the scope of this invention.

### Search Flow Chart

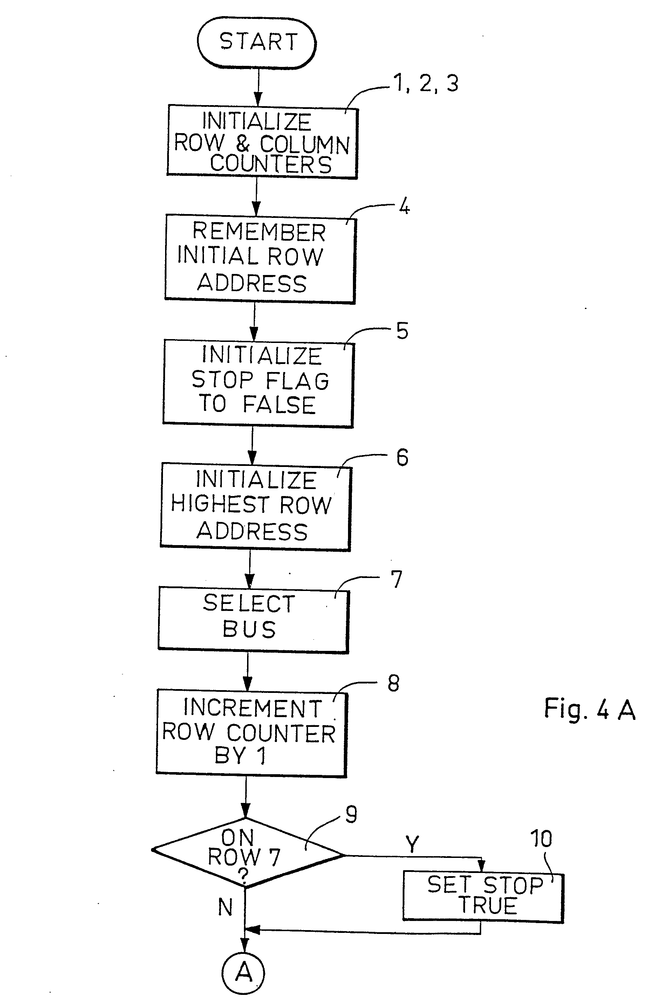

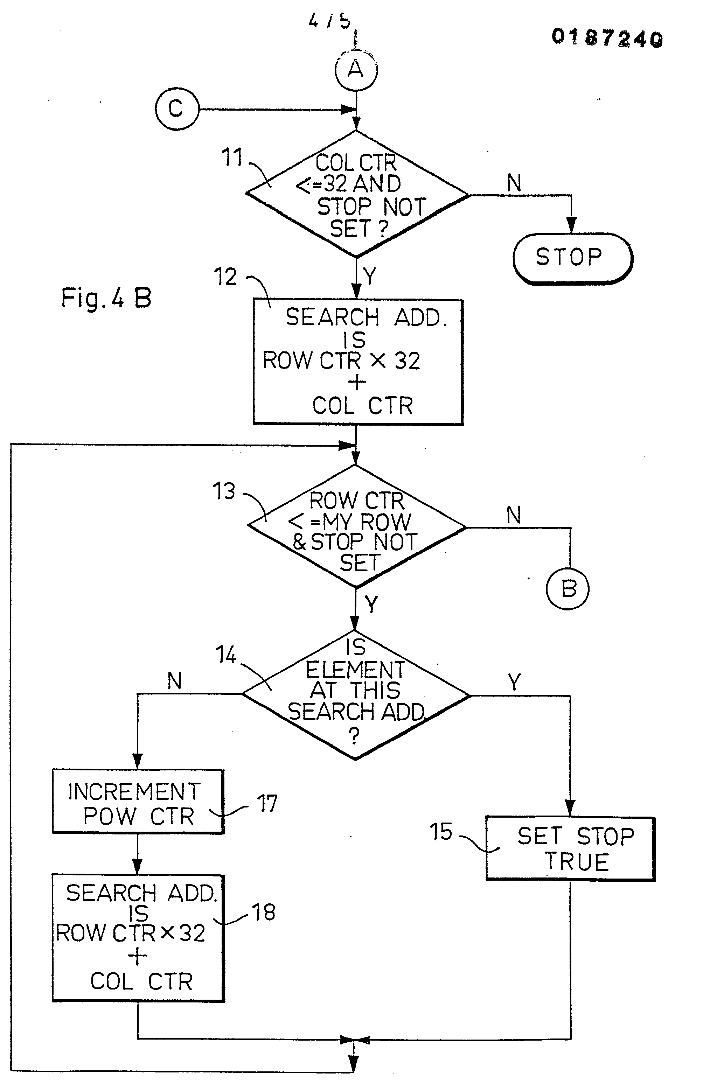

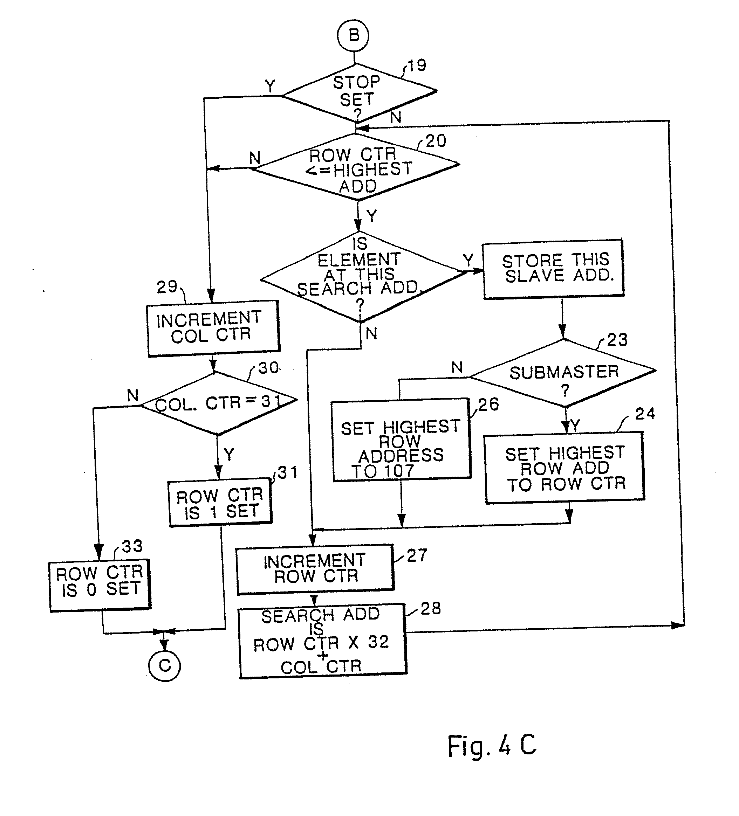

Set forth immediately below is a flow chard in written form. The steps indicated by the various numbers are the same as the steps indicated by the blocks of like number in the diagramtic flow chart of FIGURES 4A, 4B and 4C. The procedure followed is one wherein the columns are scanned in an upward (vertical) direction. Whereas it is believed that these charts are readily understood by those skilled in the art, a brief summary is presented.

```
JCEDURE find_all_slaves ;

VAR
  row,
  my_row,
  top_row,
  col : integer;
  stop : boolean;
  my_adrs,
  test_adrs: address;

BEGIN (FIND ALL SLAVES)
    ( Initialize variables before loop )
  my_adrs := controller_address;
  row := my_adrs.loc DIV 32 ;
  col := my_adrs.loc MOD 32 ;
  my_row := row ;
  stop := false ;
  top_row := 7 ;
  test_adrs.bus := hp_msib ;

    ( Test to see if we are at row 7, if so, just quit )

  row := row + 1;    ( pre-increment row counter before loop )
  IF row > top_row THEN
    stop := TRUE ;

    ( Check each address above the controller. Any module with the same )
    ( or higher column and a higher row is a slave, any module with     )
    ( a higher column and with the same or lower column ends our slave   )
    ( area.

  WHILE ( col <= 31 ) AND NOT stop DO
    BEGIN
      test_adrs.loc := 32 * row + col;

      ( Modules in the first part of the column end our slave area. )

      WHILE (row <= my_row) AND NOT stop DO
        IF module_present ( test_adrs ) THEN
          stop := true        ( end of slave area determined )
        ELSE
          BEGIN
            row:= row + 1 ;
            test_adrs.loc := 32 * row + col ;
          END;

      ( Check the rest of this column for our slaves )

      IF NOT stop THEN
      WHILE (row <= top_row) DO
        BEGIN
          IF module_present(test_adrs) THEN
            BEGIN
              add_module ( test_adrs ) ;
              IF another_master ( test_adrs ) THEN
                top_row := row   ( another master limits search )
              ELSE
                top_row := 7 ;
            END ;

          ( Now check the next address )
          row := row + 1;
          test_adrs.loc := 32 * row + col;
        END;  ( of while row <= top_row )
```

6

```
        { Now check the next column }
        col:= col + 1;
        IF col = 31 THEN
          row := 1
        ELSE
          row := 0;

      END; { of while column <= 31 }

    END; { FIND ALL SLAVES }
```

The following steps in Figure 4A carries out the initialization process. In steps 1, 2 and 3, row and column address counters are initialized at the row and column address of a master or sub-master that is making the search. In step 4, the initial row address is placed in memory, and in step 5 the STOP flag is initialized to false. In step 6, the highest row is initialized and, in the case of the grids like those shown in Figures 1 and 2, the highest value is 7. Although not part of the invention, the units in the row 0 communicate with apparatus other than the configured instrument via one type of bus and permitted communications within the configured instrument are via a different type of bus. Since the row address of the master or sub-master making the search is known, the appropriate bus can be selected in a step 7.

The row counter is then incremented by 1 in a step 8. This row is the one just above the master making the search. In a step 9, a determination is made whether the addition of 1 to the row address coused the row counter to exceed 7. If it does, the STOP flag is set true because a master on row 7 cannot have any slaves as they have to be on the row above it.

The initialization section is complete at point A. The procedure execution now falls into the main loop starting at step 11, Figure 4B. The test as to whether the scan is complete or not is at step 11. The scan is complete whenever the STOP flag is set true; which occurs when the search is terminated within the grid, or the scan has gone beyond column 31. If either condition is met, the procedure has been completed. If the conditions are not met, the procedure goes to step 12. In a step 12, the row count is multiplied by 32 and the column count is added to it so/to produce

the search address in the format used to address the elements on a bus. The first such address has been initialized in steps 1, 2, 3 and 8.

If in step 13 it is determined that the row counter is less than the row address of the master making the search and that the STOP flag has not been set, the question is asked in step 14 whether an element is at the search address. If it is, the STOP flag is set in a step 15 because no elements should be located in the same or a lower row and the search returns to the step 11, where the procedure will stop. If, however, an element is not located at the row address of the master or below it, the row counter is incremented in a step 17 and converted in a step 18 into the digital search address. The steps 13 through 18 have searched a column for any element whose row address is less than the row in which the master is located. If an element is present, the slave area is terminated and the procedure stops.

When the row in the digital code is greater than that of a master, the decision of the step 13 is now in the negative and the procedure goes to a step 19 in Figure 4C. Should it be determined in the step 19 that the STOP flag is not set, it is determined in a step 20 whether the row counter is less than the highest row address.

If it is, step 21 enquires as to whether there is an element at this search address and reads it's name. If an element is present a step 22 stores the slave or sub-master's address. If a step 23 determines from the digital name of the element that it is a sub-master, the highest row address is set to that of the row counter in a step 24 because slaves of a master making a search

9

cannot be above a row in which a sub-master is found. If, however, step 23 determines that the element is not a sub-master, the highest row address to be search is set to 7 in a step 26 because other slaves can be at higher row addresses in the same column if a sub-master is not encountered.

After either of the steps 24 or 26, the row counter is incremented by a step 27. This also occurs if the step 21 indicates that there is no module at the search address. After the step 27, the incremented row count is converted to digital form by a step 28 in a manner previously explained, and the procedure loops back to the start of the step 20 to search the rest of the column.

Return to the step 19. If it indicates that the STOP flag has been set, the column counter is incremented in a step 29. The same thing occurs if the step 20 indicates that the row counter is above the highest address.

In the next step 30, it is asked whether the column counter equals 31. If so, the row counter is set at 1 in a step 31 so as to avoid 0,31 which for reasons outside of this invention may be declared illegal. If the column counter is not equal to 31, the row counter is set at 0 by a step 33. After the step 31 or the step 33, the procedure loops back to the beginning of the step 11 shown in Figure 4B so as to scan a new column.

When the procedure just described has identified the address of a slave, whether it be a sub-master or not, the address is stored in the appropriate portion of the rectangle 2 that sets up possible communication links between a slave and its master.

It is thus seen that the location of slaves of a master in accordance with this invention make it possible for a master to

10

search for its own slaves and set up communication with them even if the position of the slaves is changed or a different hierarchy established. It is only necessary to follow the particular rules previously noted to determine the areas where slaves can be found.

0187240

WHAT IS CLAIMED IS:

1.   A method of determining the addresses of the slaves $(S_{21}, S_{22}, S_{23})$ for a given master $(M_2)$, comprising

assigning each slave $(S_{21}, S_{22}, S_{23})$ of a given master $(M_2)$ a coordinate location in an area of a grid that is assigned to its master,

scanning along rows or columns of the grid within the area assigned to the master, and

providing the row and colum address of a slave encountered in the scan.

2.   A method as set forth in Claim 1 wherein a slave of a master $(M_1)$ is a sub-master $(M_2)$ and wherein an area of the grid assigned to the sub-master is excluded from the area assigned to the master.

3.   A method as set forth in Claim 2 wherein slaves $(S_{21}, S_{22}, S_{23})$ are placed at the same or a higher column address and at a higher row address than the master $(M_2)$, and wherein

the area in which slaves for the master may be located is terminated at a column that is prior to the column in which another element $(M_3)$ is located that is at the same or a lower row address.

0187240

**PROCESSOR**                                    34

CONTAINED IN
ELEMENT AND TRANSFERRED BY BUS:
    ROW ADDRESS -0
    COL. ADDRESS -23
    NAME - MASTER
    CAPABILITY

STORED IN ELEMENT:
ADDRESSES OF IT'S SLAVES

**PROCESSOR**                                    35

CONTAINED IN
ELEMENT AND TRANSFERRED
BY BUS:
    ROW ADDRESS -2
    COL. ADDRESS -27
    NAME - SLAVE
    CAPABILITY

**FIG 1**

**FIG 2**

P 4803 EP

**FIG 3**

**FIG 3A**

0187240

```
        ┌─────────┐
        │  START  │
        └─────────┘
             │
             ▼                        1, 2, 3
   ┌────────────────────┐
   │     INITIALIZE     │
   │  ROW & COLUMN      │
   │     COUNTERS       │
   └────────────────────┘
             │
             ▼                        4
   ┌────────────────────┐
   │     REMEMBER        │
   │   INITIAL ROW       │
   │     ADDRESS         │
   └────────────────────┘
             │
             ▼                        5
   ┌────────────────────┐
   │     INITIALIZE      │
   │    STOP FLAG        │
   │    TO FALSE         │
   └────────────────────┘
             │
             ▼                        6
   ┌────────────────────┐
   │     INITIALIZE      │
   │   HIGHEST ROW       │
   │     ADDRESS         │
   └────────────────────┘
             │
             ▼                        7
   ┌────────────────────┐
   │      SELECT         │
   │       BUS           │
   └────────────────────┘
             │
             ▼                        8
   ┌────────────────────┐
   │    INCREMENT        │
   │  ROW COUNTER        │
   │      BY 1           │
   └────────────────────┘
             │
             ▼              9
        ╱─────────╲                 10
       ╱    ON     ╲  ──Y──►  ┌──────────┐
       ╲  ROW 7    ╱          │ SET STOP │
        ╲    ?    ╱           │   TRUE   │
         ╲───────╱            └──────────┘
             │ N                    │
             ▼◄────────────────────┘
          ┌─────┐
          │  A  │
          └─────┘
```

Fig. 4 A

P 48 03 EP

Fig. 4 B

0187240

P4803 EP

0187240

Fig. 4 C

ıtt 5 (5)